# EUROPÄISCHE PATENTSCHRIFT

(11) **EP 1 321 177 B1**
(45) Veröffentlichungstag und Bekanntmachung des Hinweises auf die Patenterteilung: **22.08.2007**
(21) Anmeldenummer: 02028391.7
(22) Anmeldetag: 18.12.2002
(51) Int. Cl.: B01D 53/04

(54) **Adsorber zur Reinigung von Rohgasen**
Adsorber for purification of raw gases
Adsorbant de purification des gaz bruts

(30) Priorität: 21.12.2001 DE 10164461
(43) Veröffentlichungstag der Anmeldung: 25.06.2003
(73) Patentinhaber: M+W Zander Facility Engineering GmbH, 70499 Stuttgart (DE)
(72) Erfinder: Renz Manfred Dr., 71254 Ditzingen (DE)
(74) Vertreter: Kohl, Karl-Heinz

(56) Entgegenhaltungen:
- EP-A- 0 635 311
- DE-A- 4 104 513
- DE-A- 19 613 326
- DE-A- 19 828 593
- US-A- 4 046 525
- US-B1- 6 197 097

## Beschreibung

Die Erfindung betrifft einen Adsorber zur Reinigung von Rohgas nach dem Oberbegriff des Anspruches 1.

Zur Reinigung von Rohgasen ist bekannt, daß Rohgas durch Filterelemente zu leiten, welche die unerwünschten Bestandteile zurückhalten. Bei einem bekannten Adsorber (US-A-4 046 525) ist ein zylindrisches Drahtgewebe vorgesehen, auf das elektrisch leitfähiges Adsorbermaterial aufgebracht ist. An beiden Enden des Drahtgewebes sind Endscheiben befestigt, von denen die eine Endscheibe geschlossen ist und die andere Endscheibe eine Öffnung aufweist. Das zu reinigende Rohgas tritt von außen durch das Adsorbermaterial und das Drahtgewebe in den Adsorber ein, wobei die unerwünschten Bestandteile im Adsorbermaterial zurückgehalten werden. Durch die Öffnung der einen Endscheibe strömt das Reingas nach außen. Beim Desorptionsvorgang wird mittels einer Düse ein heißes Medium in das Innere des Adsorbers eingebracht. Es strömt durch das Drahtgewebe und das Adsorbermaterial radial nach außen.

Es ist ein weiterer Adsorber bekannt (DE 198 28 593 A), dessen Adsorbermaterial mäanderförmig über stangenförmige Elemente gespannt ist.

Der Erfindung liegt die Aufgabe zugrunde, den gattungsgemäßen Adsorber so auszubilden, daß das Rohgas in einfacher Weise optimal gereinigt werden kann.

Diese Aufgabe wird beim gattungsgemäßen Adsorber erfindungsgemäß mit den kennzeichnenden Merkmalen des Anspruches 1 gelöst.

Das Filtermaterial des erfindungsgemäßen Adsorbers besteht aus einem elektrisch leitfähigen Adsorbermaterial, mit dem die im Rohgas befindlichen unerwünschten Bestandteile sehr einfach zurückgehalten werden können. Das elektrisch leitfähige Adsorbermaterial kann einfach regeneriert werden, indem lediglich Regenerationsluft in umgekehrter Strömungsrichtung durch das Adsorbermaterial geführt wird. Als Adsorbermaterial kommen vorteilhaft elektrisch regenerierbare ACF-Filter zum Einsatz, die aus einem aktivierten Kohlefasergewebe oder -vlies bestehen. Beim Durchtritt des Rohgases durch diese Adsorber bleiben die Schadstoffe hängen und können in einem Regenerationsprozeß wieder entfernt werden. Zur schnellen, sicheren und kontrollierten Regeneration wird das Adsorbermaterial über regelungstechnische Verfahren elektrisch aufgeheizt und mit Spülluft bzw. Regenerationsluft durchströmt. Der erfindungsgemäße Adsorber kann bei Lüftungsanlagen zur Aufbereitung von Außenluft und lösemittel- oder geruchsbeladener Fortluft eingesetzt werden. Die Endscheiben sitzen unter Zwischenlage der elektrisch nicht leitenden Ringdichtungen auf der Achse. Sie ist vom Adsorbermaterial mit Abstand umgeben, das unter axialer Spannung steht.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung eine Filtereinheit mit Filtermodulen,
- Fig. 2: in schematischer Darstellung einen erfindungsgemäßen Adsorber in einer Adsorptionsphase,
- Fig. 3: in einer Darstellung entsprechend Fig. 2 den erfindungsgemäßen Adsorber in einer Regenerationsphase,
- Fig. 4: in schematischer Darstellung eine Regenerationsmatrix einer Filtereinheit mit zeitlichem Ablauf,
- Fig. 5: in schematischer Darstellung einen Schnitt durch ein Filtermodul,
- Fig. 6 bis Fig. 10: jeweils in vergrößerter Darstellung Einzelheiten des Filtermoduls gemäß Fig. 5,
- Fig. 11: das Filtermodul gemäß Fig. 5 in der Desorptionsphase,
- Fig. 12: eine zweite Ausführungsform eines Filtermoduls,
- Fig. 13: in vergrößerter Darstellung die Befestigung eines Endes einer Achse des erfindungsgemäßen Adsorbers,
- Fig. 14: das Filtermodul gemäß Fig. 12 in der Desorptionsphase,
- Fig. 15: eine Stirnansicht auf im Filtermodul untergebrachte Adsorber während des Adsorptionsvorganges,
- Fig. 16: in einer Darstellung entsprechend Fig. 15 die Adsorber in der Desorptionsphase,
- Fig. 17: eine Stirnansicht eines Filtermoduls,
- Fig. 18: in schematischer Darstellung eine Anlage zur Außenluftaufbereitung,
- Fig. 19: in schematischer Darstellung eine Anlage zur Fortluftbehandlung.

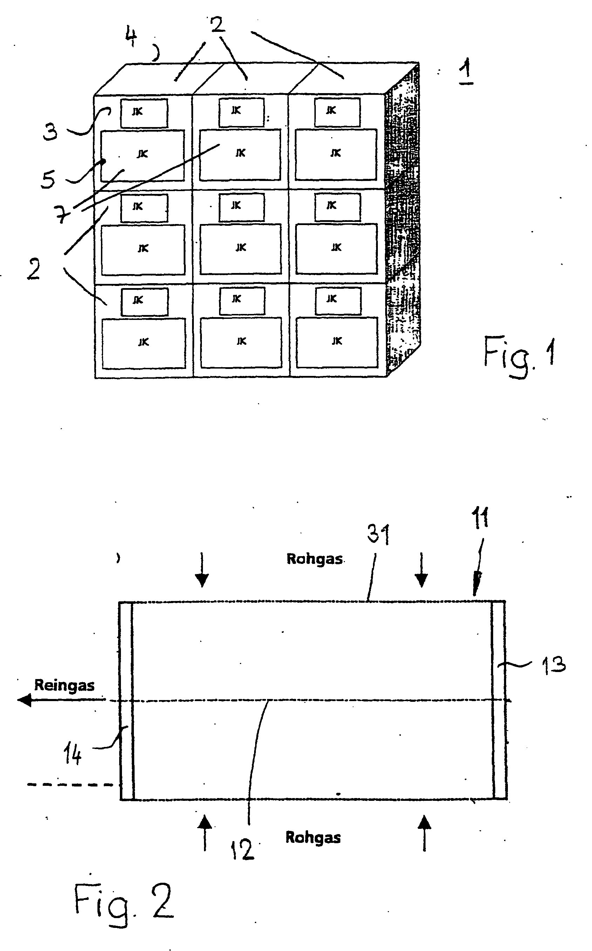

Fig. 1 zeigt beispielhaft eine Filtereinheit 1 einer Fortluft- oder Außenluftanlage. Die Filtereinheit besteht im dargestellten Ausführungsbeispiel aus neun Modulen 2, die in bezug auf Bauart und Größe vorteilhaft identisch sind. Die Anzahl der für die Filtereinheit 1 eingesetzten Module hängt vom geforderten Volumenstrom im jeweiligen Einsatzfall ab.

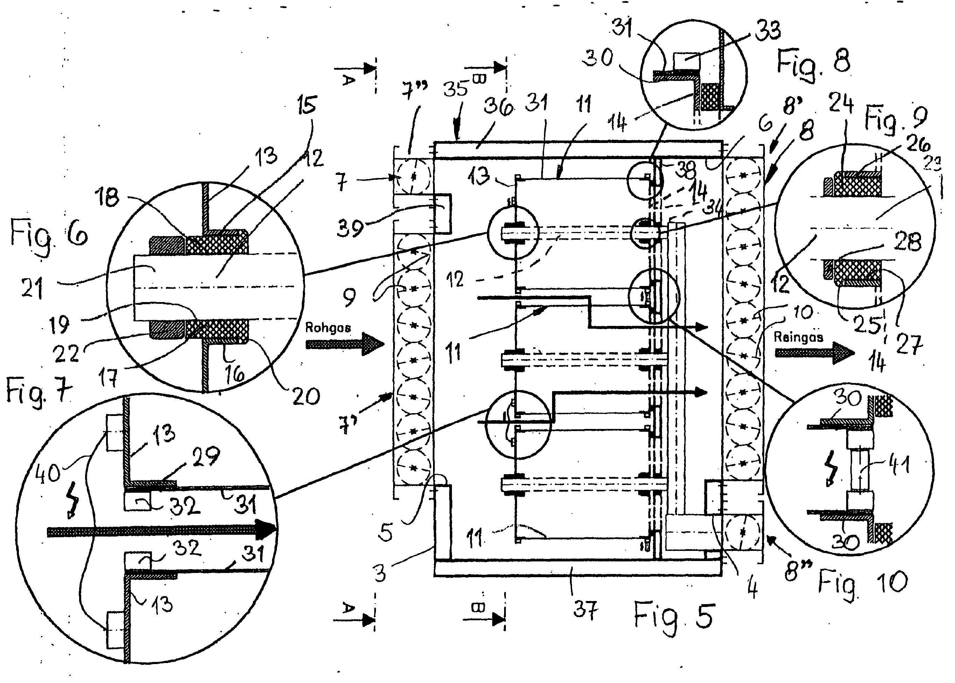

Jedes Modul 2 weist an seiner Vorderseite 3 sowie an seiner Rückseite 4 jeweils wenigstens eine Eintrittsöffnung 5 und eine Austrittsöffnung 6 (Fig. 5) auf. An den Ein- und Austrittsöffnungen 5, 6 ist jeweils eine Luftklappeneinheit 7, 8 (Fig. 1 und 5) angeordnet. Diese Luftklappeneinheiten 7, 8 haben parallel zueinander liegende Luftklappen 9, 10, die über (nicht dargestellte) Stellmotoren geöffnet bzw. geschlossen werden können. Die Luftklappen 9, 10 ermöglichen eine lüftungstechnische Abtrennung der Filtermodule 2 vom gesamten Luftstrom der Filtereinheit 1.

Innerhalb jedes Moduls 2 ist eine von der Größe des Luftstroms abhängige Zahl von Kartuschen 11 vorgesehen (Fig. 2 und 5). Wie sich aus den Fig. 5 bis 10 ergibt, hat die Kartusche 11 eine Achse 12, die durch ein Rohr gebildet wird, das im Bereich zwischen zwei auf der Achse 12 befestigten Böden 13, 14 perforiert ist. Die beiden Böden 13, 14 bilden Enddeckel der Kartusche 11. Die Enddeckel haben, wie für den Enddeckel 13 in Fig. 6 dargestellt ist, eine zentrale Öffnung 15, deren Rand 16 rechtwinklig nach innen gebogen ist und zur Aufnahme einer Ringdichtung 17 dient. Sie besteht aus einem thermisch beständigen und elektrisch nicht leitenden Werkstoff und hat ein Innengewinde 18, so daß die Ringdichtung 17 auf das Außengewinde 19 des Achsenendes geschraubt werden kann. Die Ringdichtung 17 ragt über den umlaufenden Rand 15 des Bodens 13 und hat einen diesen Rand 15 übergreifenden, radial nach außen gerichteten Ringflansch 20. An ihm liegt der abgewinkelte Rand 16 des Bodens 13 dichtend an. Auf das über die Ringdichtung 17 überstehende Ende 21 der Achse 12 ist eine Kontermutter 22 geschraubt, die an der Ringdichtung 17 anliegt.

Auf das gegenüberliegende Ende 23 der Achse 12 (Fig. 9) ist eine gleiche Ringdichtung 24 geschraubt, die mit ihrem endseitigen Ringflansch 25 den radial nach innen umgebogenen Rand 26 einer Durchstecköffnung 27 für die Achse 12 übergreift. Der Rand 26 umschließt die zentrisch im Boden 14 liegende Durchstecköffnung 27. Zur Axialsicherung der Ringdichtung 24 sitzt auf der Achse 12 ein Sicherungsring 28.

Der äußere Rand 29, 30 (Fig. 7 und 8) der beiden Böden 13, 14 ist rechtwinklig abgebogen, so daß ein umlaufender Ring entsteht, auf den ein ACF-Gewebe 31 oder ein ACF-Vlies gewickelt werden kann. Die fluchtend zueinander liegenden Ränder 29, 30 weisen (nicht dargestellte) Spanndorne für dieses Gewebe oder Vlies 31 auf. Es kann in mehreren Lagen auf die abgewinkelten Ränder 29, 30 gewickelt werden. Im Bereich der Ränder 29, 30 sitzt auf dem gewickelten Gewebe 31 jeweils ein Spannring 32, 33, mit dem das Gewebe 31 gegen die Außenseite der Ränder 29, 30 gespannt wird. Über die auf die Enden 21, 23 der Achse 12 geschraubten Ringdichtungen 20, 24 kann der Abstand zwischen den beiden Böden 13, 14 verändert und auf diese Weise das Gewebe 31 in Achsrichtung gespannt werden.

Beim dargestellten und beschriebenen Ausführungsbeispiel wird der Mantel der Kartusche 11 durch das gewickelte ACF-Gewebe 31 gebildet. Es ist auch möglich, das ACF-Gewebe 31 oder das ACF-Vlies auf einen zylindrischen Träger zu wickeln, der aus elektrisch nicht leitendem, luftdurchlässigem Material besteht. Für einen solchen Träger kann beispielsweise ein Glasseidengewebe verwendet werden. Dieser Träger wird auf gleiche Weise am abgewinkelten äußeren Rand 29, 30 der Böden 13, 14 befestigt wie das ACF-Gewebe 31.

Der der Luftklappeneinheit 7 zugewandte Boden 13 der Kartusche 11 ist geschlossen, während der gegenüberliegende Boden 14 Durchtrittsöffnungen 34 für die gefilterte Luft aufweist. Dieser Boden 14 kann beispielsweise in Form eines Speichenrades ausgebildet sein.

Das Modul 2 hat ein quaderförmiges Gehäuse 35, das beispielsweise aus Metall bestehen kann. Im Gehäuse 35 sind je nach Größe des Luftstromes ein oder mehrere Kartuschen 11 parallel nebeneinanderliegend angeordnet. Im dargestellten Ausführungsbeispiel sind in einer Reihe drei Kartuschen 11 mit Abstand übereinander angeordnet. Weitere Kartuschen befinden sich mit Abstand neben der in Fig. 5 dargestellten Kartuschenreihe. Sämtliche Kartuschen 11 haben die beschriebene Ausbildung.

Benachbarte Kartuschen 11 einer Reihe sind, wie Fig. 7 zeigt, elektrisch in Reihe geschaltet. Die Verbindung erfolgt über die elektrisch leitenden Böden 13 der nebeneinander liegenden Kartuschen 11. Da die Kartuschen 11 elektrisch in Reihe geschaltet sind, wird der elektrische Widerstand der Kartuschen 11 erhöht und der Strom reduziert. Die Regelung der Spannung erfolgt über einen (nicht dargestellten) Leistungssteller, der vorteilhaft ein regelbares Drehstromnetzteil hat.

Der Boden 37 und die Decke 36 des Modulgehäuses 35 können doppelwandig ausgebildet sein. Auch die Vorderwand 3 und die Rückwand 4 können doppelwandig ausgebildet sein.

Wie Fig. 5 zeigt, sind die Enddeckel 14 der Kartuschen 11 an einer Zwischenwand 38 befestigt, welche sich zwischen dem Boden 37 und der Decke 36 erstreckt. Sie hat für die durch den Enddeckel 14 austretende gereinigte Luft entsprechende Durchgangsöffnungen.

Die Luftklappeneinheit 7 besteht aus zwei Teilen 7' und 7". Der Teil 7" liegt benachbart zur Gehäusedecke 36 und hat nur eine einzige Luftklappe 10. Der andere Teil 7' besteht aus mehreren, parallel übereinander angeordneten Luftklappen 10. Beide Teile 7' und 7" sind durch eine Zwischenwand 39 der Vorderwand 3 des Modulgehäuses 35 voneinander getrennt.

Auch die Luftklappeneinheit 8 an der Rückseite 4 des Modulgehäuses 36 besteht aus zwei Teilen 8' und 8". Sie sind im dargestellten Ausführungsbeispiel gleich ausgebildet wie die Teile 7', 7" der Luftklappeneinheit 7, jedoch in bezug auf diese um 180° versetzt angeordnet. Die Luftklappen 9, 10 sämtlicher Teile 7', 7" und 8', 8" liegen parallel zueinander.

Die über- und nebeneinander angeordneten Kartuschen 11 haben das adsorptiv wirksame Filtermaterial 31, das aufgrund der beschriebenen Ausbildung der Kartuschen einfach montiert und in beliebiger Anzahl von Lagen aufgebracht werden kann.

Anhand von Fig. 2 wird das Adsorptionsprinzip des Kartuschenfilters 11 näher erläutert.

An einer Phasengrenze, zum Beispiel gasförmig-fest, kann es zu einer Erhöhung der Konzentration der einen Phase, zum Beispiel der gasförmigen Phase, kommen, was als Adsorption bezeichnet wird. Maßgebend ist die Grenzfläche der beiden Phasen. Wird keine chemische Reaktion bei der Adsorption ausgelöst, spricht man von einer physikalischen Adsorption, bei der eine mindestens der Kondensationswärme entsprechende Wärme frei wird. Zum Abscheiden von Gasen und Dämpfen auch aus feuchter Luft eignet sich Kohle besonders gut, da sie aufgrund ihrer Elektronenkonfiguration unpolarisiert ist. Die Stärke der Adsorption hängt von den physikalischen Eigenschaften des zu adsorbierenden Stoffes ab. Wasserstoff, Sauerstoff, Stickstoff werden bei normaler Temperatur nicht adsorbiert, so daß die Kohle als Filtermedium nicht mit unbeabsichtigt adsorbierten Stoffen beladen wird.

Bei der ACF-Filtration (activated carbon fiber - aktiviertes Kohlefasergewebe) ist zwischen der Adsorptionsphase und der Desorptionsphase zu unterscheiden. In der Adsorptionsphase wird die Filterkartusche beladen, während sie in der Desorptionsphase entladen wird. Während des Beladevorganges wird das zu reinigende Gas, das sogenannte Rohgas, durch die Kartuschen 11 geführt und hierbei gereinigt.

Fig. 2 zeigt die Strömungsrichtung des Rohgases, das zunächst in radialer Richtung von außen auf das ACF-Gewebe 31 trifft und hierbei durch das Gewebe strömt. Im dargestellten Ausführungsbeispiel strömt das Rohgas radial von außen nach innen. Beim Durchtritt durch das ACF-Gewebe 31 werden die unerwünschten Bestandteile zurückgehalten. Innerhalb der Kartusche 11 strömt das Rohgas dann in Achsrichtung und tritt aus dem Boden 14 der Kartusche 11 als Reingas aus. Der gegenüberliegende Boden 13 der Kartusche 11 ist luftdicht ausgebildet, so daß gewährleistet ist, daß das durch das Gewebe 31 nach innen in die Kartusche 11 eintretende Gewebe ausschließlich über die Öffnungen im Boden 14 austreten kann. Das ACF-Gewebe 31 kann beispielsweise in fünf bis fünfzehn Lagen in der beschriebenen Weise auf die abgewinkelten äußeren Ränder 29, 30 der Böden 13, 14 gewickelt werden.

Während des Adsorptionsvorganges reichert sich die Aktivkohlefaser 31 mit den adsorbierten Substanzen an. Die der von außen anströmenden Luft zugewandte Schicht wird dabei stärker angereichert als in Strömungsrichtung tiefer liegende Schichten des Gewebes 31.

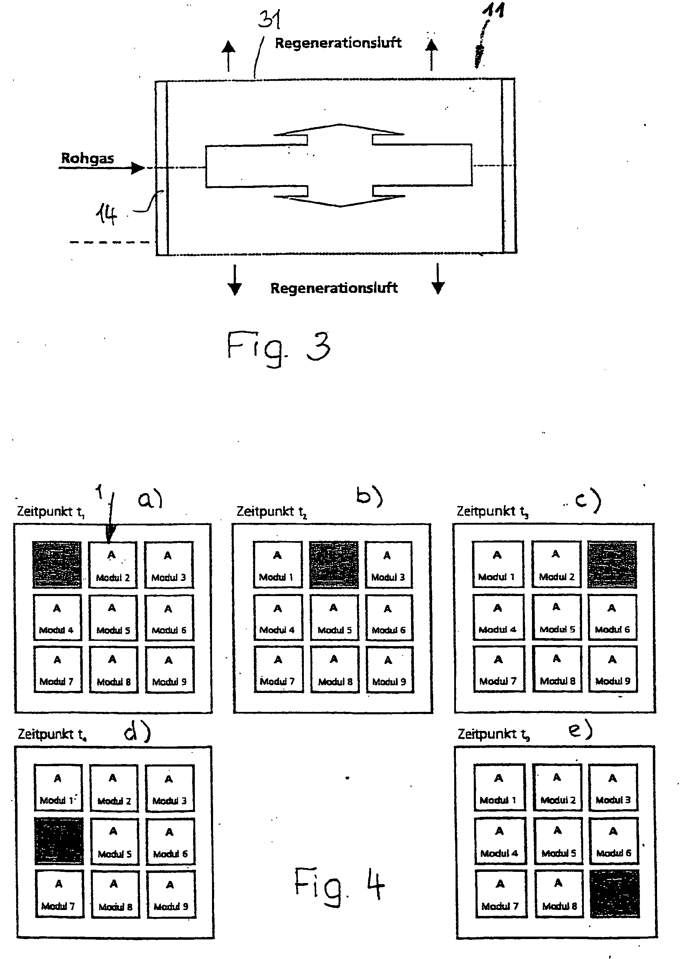

Nach einer bestimmten Zeitspanne, spätestens jedoch bei Erreichen des erlaubten oder vorgegebenen Durchbruchwertes - dies ist der Konzentrationswert in der gereinigten Luft - wird von Adsorptionsauf Desorptionsbetrieb umgeschaltet. Dabei werden in noch zu beschreibender Weise die Luftklappen 9, 10 der Luftklappeneinheiten 7, . 8 so umgeschaltet, daß ein Regenerationsluftstrom das ACF-Gewebe in umgekehrter Richtung durchströmt (Fig. 3). Die Desorptionsluftmenge kann gegenüber der Adsorptionsmenge wesentlich kleiner sein. Beim Desorptionsvorgang wird das ACF-Gewebe 31 mit elektrischem Strom erhitzt. Dazu sind an den gegenüberliegenden Böden 13, 14 der Kartusche 11 elektrische Anschlüsse vorgesehen, wobei die übereinander liegenden Kartuschen vorteilhaft über eine elektrische Verbindung 40 an ihren Böden 13 (Fig. 7) miteinander verbunden werden.

Auch die Böden 14 der benachbarten Kartuschen sind über eine Verbindung 41 elektrisch miteinander verbunden (Fig. 10). Der Strom fließt in Längsrichtung der Kartusche 11 ausschließlich durch die elektrisch leitenden Fasern des ACF-Gewebes 31. Der Strom wird so geregelt, daß sich die Fasern des Gewebes 31 auf die gewünschte Desorptionstemperatur erwärmen, zum Beispiel auf 200°C. Außerdem wird der Strom so eingestellt, daß die Konzentration im Desorptionsluftstrom gewünschte Werte, zum Beispiel 25 % UEG, nicht überschreitet. Vorteilhaft wird der Desorptionsluftstrom erst dann eingeschaltet, wenn das Gewebe 31 eine bestimmte Temperatur hat.

Wie Fig. 3 zeigt, werden die Kartuschen 11 während der Desorptionsphase im Vergleich zur Adsorptionsphase gemäß Fig. 2 in umgekehrter Richtung mit Gas durchströmt. Es tritt durch die Öffnungen im Boden 14 axial in die Kartusche 11 ein und tritt dann in radialer Richtung nach Durchströmen des ACF-Gewebes 31 radial nach außen. Die in der Adsorptionsphase im Gewebe 31 gebundenen Gase werden sukzessive wieder freigesetzt und als Fortluft entweder ins Freie befördert oder einer weiteren Behandlungsstufe zugeführt.

Da die Desorption des ACF-Gewebes 31 mit einem im Vergleich zur Adsorptionsphase wesentlich geringeren Volumenstrom durchgeführt werden kann, können nachgeschaltete Geräte oder Verfahren für die weitere Behandlung wirtschaftlich betrieben werden. Die Grenze der Aufkonzentrierung wird bei brennbaren Substanzen durch die UEG (untere Explosionsgrenze) bestimmt. Bei Fortluftanlagen können typischerweise Werte bis etwa 20fach erreicht werden.

Bei Außenluftanlagen können aufgrund der zumeist auftretenden geringen Eingangskonzentrationen wesentlich höhere Aufkonzentrierungsfaktoren, zum Beispiel 200fach, erreicht werden.

Bei einer Fortluftbehandlung wird von einer Eingangskonzentration des Rohgases im unteren ppm-Bereich ausgegangen. Die Ausgangskonzentration des Reingases nach dem Durchtritt durch die Filtereinheit 1 muß die Umweltauflagen erfüllen. Der Abscheidegrad der Kartuschen 11 innerhalb der Filtereinheit 1 wird über die Anzahl der Wicklungen des ACF-Gewebes oder -Vlieses 31 erreicht.

Die Adsorption und Desorption bzw. Regeneration der Kartuschen 11 werden über die luftdichten Klappen 9, 10 der Luftklappeneinheiten 7, 8 gesteuert, die an den Ein- und Austrittsöffnungen 5, 6 der Filtermodule 2 vorgesehen sind.

Fig. 4 zeigt schematisch in Matrixform die Regeneration einer Filtereinheit 1 zu unterschiedlichen Zeitpunkten. Die Filtereinheit 1 hat beispielhaft neun Module 2, die in drei Reihen übereinander angeordnet sind. Zum Zeitpunkt t₁ (Fig. 4a) wird das erste, mit RG bezeichnete Modul regeneriert, während sich die Kartuschen der restlichen Module in der Adsorptionsphase befinden.

Zu einem späteren Zeitpunkt t₂ (Fig. 4b) werden in noch zu beschreibender Weise die Luftklappen so geschaltet, daß das zweite Modul in die Desorptions- bzw. Regenerationsphase geschaltet wird. Die restlichen Module befinden sich im Adsorptionszyklus.

Entsprechend wird gemäß Fig. 4c zu einem Zeitpunkt t₃ das dritte Modul in die Regenerationsphase geschaltet, während sich die Kartuschen der übrigen Module in der Adsorptionsphase befinden.

Zum Zeitpunkt t₄ (Fig. 4d) wird das vierte Modul in die Regenerationsphase geschaltet. Auf diese Weise können nacheinander die einzelnen Module in die Regenerationsphase geschaltet werden, während sich die jeweils anderen Module in der Adsorptionsphase befinden.

Fig. 4e zeigt die letzte Stufe zum Zeitpunkt t₉, bei der das neunte Modul in die Regenerationsphase geschaltet ist.

Die Umschaltung der einzelnen Module in die Regenerationsphase erfolgt in Abhängigkeit der zu behandelnden Abgasmenge und Abgaskonzentration vorteilhaft zyklisch. Während der Regenerationsphase wird in der beschriebenen Weise jeweils ein Filtermodul 2 vom Rohgasstrom getrennt und nach Erreichen der erforderlichen Betriebstemperatur von zum Beispiel 200°C über einen Spülluftstrom, wie anhand von Fig. 3 beschrieben, gereinigt. Der beladene Regenerationsluftstrom, der beispielsweise nur 1/20 bis 1/200 des Rohluftstromes beträgt, wird über ein eigenes Rohrnetz ins Freie befördert.

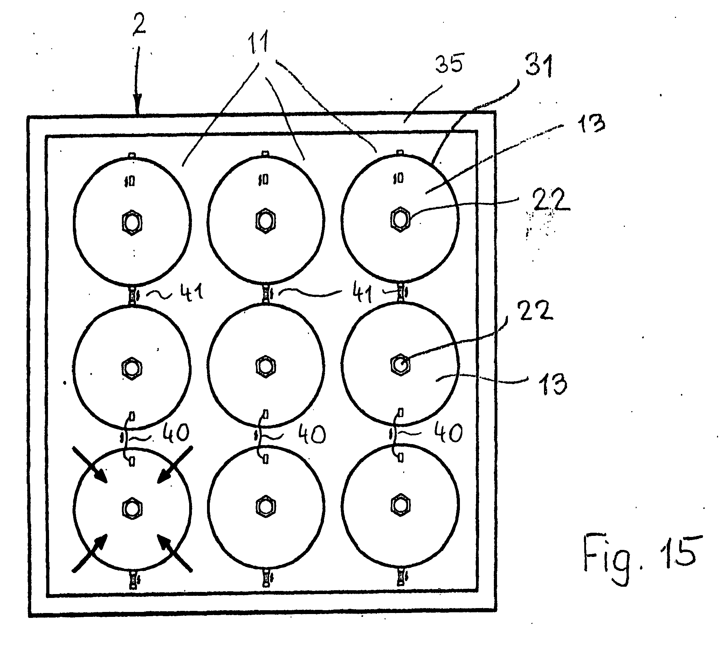

Um mit üblichen Spannungen und vorteilhaften geometrischen Abmessungen arbeiten zu können, werden mehrere Kartuschen 11 im Modul 2 elektrisch in Reihe geschaltet und gleichmäßig auf die drei Phasen der Stromversorgung verteilt. Eine vorteilhafte Anordnung mit drei Gruppen aus jeweils elektrisch in Reihe geschalteten Kartuschen 11, die jeweils in einem Filtermodul 2 angeordnet sind, zeigt Fig. 15. Hier sind die in drei Reihen über- und untereinander angeordneten Kartuschen 11 in Stirnansicht dargestellt. Sie haben kreisförmigen Umriß und sind über die elektrischen Verbindungen 40, 41 miteinander verbunden. Im dargestellten Ausführungsbeispiel sind die übereinander liegenden Kartuschen 11 elektrisch leitend miteinander verbunden.

Für die linke untere Kartusche ist mit Pfeilen dargestellt, wie das Rohgas radial in die Kartusche 11 eintritt. Auch bei den übrigen Kartuschen des Filtermoduls 2 tritt das zu reinigende Rohgas radial nach innen ein. Hierbei durchströmt das Rohgas das ACF-Gewebe 31, in dem in der beschriebenen Weise die unerwünschten Bestandteile des Rohgases zurückgehalten werden.

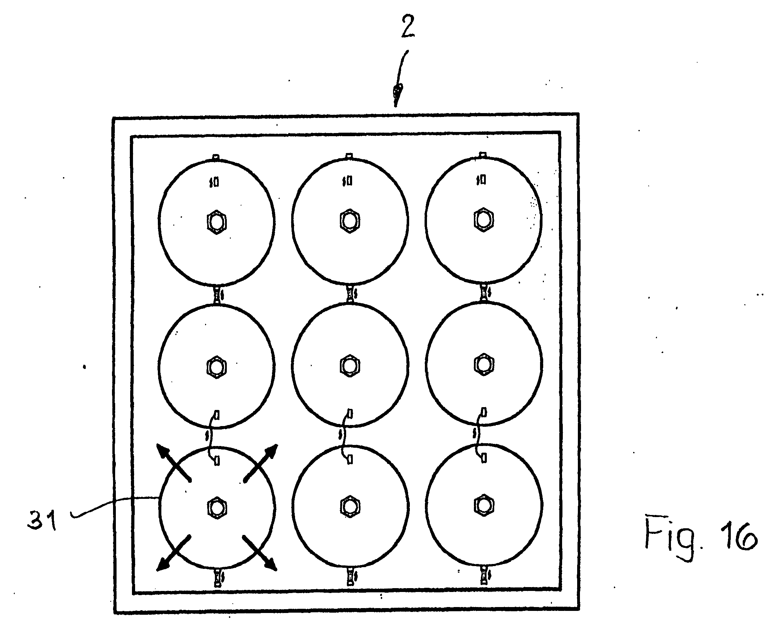

Fig. 16 zeigt den Fall, daß das Filtermodul 2 in die Desorptionsphase umgeschaltet worden ist. In diesem Falle strömt das Gas in umgekehrter Richtung, im Ausführungsbeispiel radial nach außen durch das ACF-Gewebe 31.

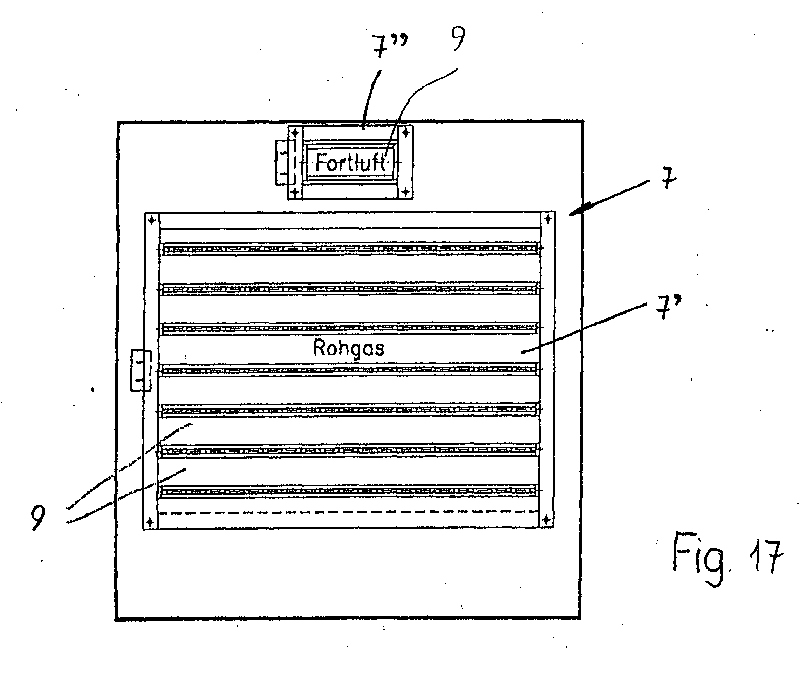

Die Luftklappen 9, 10 der beiden Luftklappeneinheiten 7, 8 liegen in der Schließstellung dicht aneinander, so daß durch sie keine Luft in das jeweilige Filtermodul eintreten kann. Fig. 17 zeigt in Frontansicht die Luftklappeneinheit 7 mit den beiden Teilen 7' und 7". Der oben liegende Teil 7" mit der einzigen Luftklappe 9 ist wesentlich kürzer als der darunter liegende Teil 7' mit einer Mehrzahl von Luftklappen 9. In gleicher Weise sind auch die beiden Teile 8', 8" der Luftklappeneinheit 8 an der Rückseite 4 des Modulgehäuses 35 ausgebildet.

In der Adsorptionsphase sind die Luftklappen 9 und 10 des Teiles 7" und 8" der beiden Luftklappeneinheiten 7 und 8 geschlossen (Fig. 5). Die Luftklappen 9, 10 der Teile 7', 8' hingegen sind offen. Dadurch kann das Rohgas durch die geöffneten Luftklappen 9 der Luftklappeneinheit 7 in das Modulgehäuse 35 strömen. Da die der Luftklappeneinheit 7 zugewandten Enddeckel 13 der Kartuschen 11 luftdicht geschlossen sind, kann die Reinluft nur zwischen den einzelnen Kartuschen strömen, wie in Fig. 5 durch die eingezeichneten Strömungspfeile veranschaulicht ist. Im Bereich zwischen den Kartuschen 11 strömt das Rohgas dann radial nach innen in die jeweiligen Kartuschen 11. Beim Durchtritt durch das ACF-Gewebe 31 bleiben die im Rohgas befindlichen unerwünschten Bestandteile hängen. Innerhalb der Kartuschen 11 strömt das Gas axial und tritt durch die Öffnungen der Enddeckel 14 aus den Kartuschen 11 aus. Von hier aus strömt das Reingas durch die geöffneten Luftklappen 10 der Luftklappeneinheit 8 nach außen.

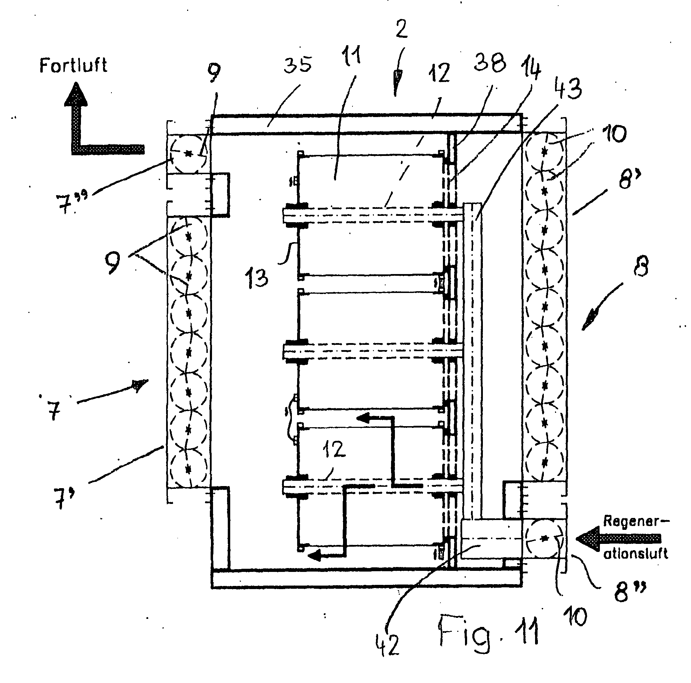

Fig. 11 zeigt das Filtermodul 2 gemäß Fig. 5 in der Desorptionsphase. In diesem Falle werden die beiden Luftklappeneinheiten 7, 8 so umgestellt, daß die beiden Luftklappen 9 und 10 der Teile 7" und 8" der Luftklappeneinheiten 7 und 8 geöffnet und die Luftklappen 9, 10 der Teile 7', 8' geschlossen werden. Über den geöffneten Luftklappenteil 8" an der Rückseite 4 des Gehäusemoduls 35 wird die Regenerationsluft zugeführt. Sie strömt nach dem Durchtritt durch die geöffnete Luftklappe 10 des Teiles 8" in einen Kanal 42, der bis nahe an die Zwischenwand 38 des Modulgehäuses 35 reicht und in den senkrecht eine Verteilerleitung 43 mündet. Sie erstreckt sich senkrecht zur Achse der Kartusche 11, deren Achsen 12 an die Verteilerleitung 43 angeschlossen sind. Die über den Luftklappenteil 8" zugeführte Regenerationsluft strömt somit über den Kanal 42 in die Verteilerleitung 43 und von dort in die Achsen 12. Ihr anderes, der Luftklappeneinheit 7 zugewandtes Ende ist geschlossen. Die Regenerationsluft strömt somit im Bereich zwischen den beiden Enddeckeln 13, 14 durch die Öffnungen des perforierten Rohres 12 radial nach außen. Im Bereich zwischen benachbarten Kartuschen 11 strömt die Regenerationsluft, die bei ihrem Durchtritt durch das ACF-Gewebe 31 die darin adsorbierten Stoffe mitnimmt, in Richtung auf den Luftklappenteil 7", durch dessen geöffnete Luftklappe 9 sie dann aus dem Filtermodul 2 strömt.

Da die Achsen 12 der Kartuschen 11 senkrecht zu den Drehachsen der Luftklappen 9, 10 liegen, ist innerhalb des Filtermoduls 2 eine optimale Strömung des Rohgases bzw. der Regenerationsluft gewährleistet. Die aus dem Luftklappenteil 7" austretende Luft wird als Fortluft weitergeführt.

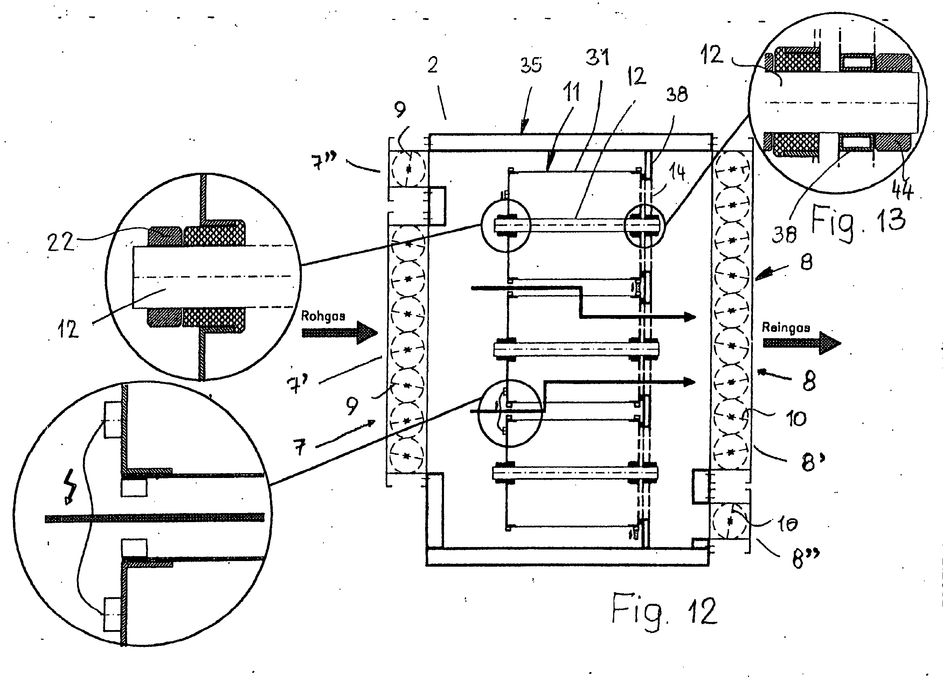

Die Fig. 12 bis 14 zeigen eine Ausführungsform, bei der die als Rohre ausgebildeten Achsen 12 nicht mit Durchtrittsöffnungen versehen sind. Das der Luftklappeneinheit 8 zugewandte Ende der Achsen 12 steht über die Zwischenwand 38 des Modulgehäuses 35 vor. Auf dieses überstehende Ende ist eine Kontermutter 44 geschraubt, die an der Zwischenwand 38 anliegt. Zusammen mit der am anderen Achsende vorgesehenen Kontermutter 22 wird das ACF-Gewebe 31 einwandfrei in axialer Richtung gespannt. Im übrigen sind die Kartuschen 11 gleich ausgebildet wie bei der vorigen Ausführungsform.

Zur Reinigung des Rohgases sind die Luftklappen 9, 10 der Teile 7', 8' der Luftklappeneinheiten 7, 8 geöffnet, während die beiden Luftklappen 9, 10 der Luftklappenteile 7", 8" geschlossen sind. Das Rohgas tritt somit durch die geöffneten Luftklappen 9 des Luftklappenteiles 7' in das Modulgehäuse ein, strömt zwischen benachbarten Kartuschen 11 axial und tritt radial durch die ACF-Gewebe 31 in die Kartuschen ein. Hierbei wird das Rohgas von den unerwünschten Bestandteilen gereinigt, die im ACF-Gewebe 31 in der beschriebenen Weise festgehalten werden. Das gereinigte Gas strömt dann im Bereich zwischen der Achse 12 und dem ACF-Gewebe 31 axial zur Endscheibe 14 und tritt durch deren Durchtrittsöffnungen aus. Über die geöffneten Luftklappen 10 des Luftklappenteiles 8' strömt dann das Reingas aus dem Modulgehäuse 35.

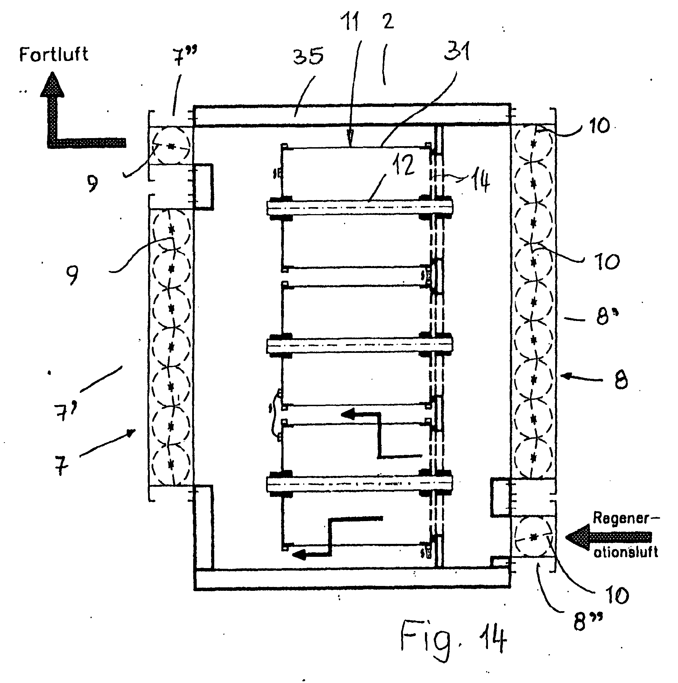

Fig. 14 zeigt das Filtermodul 2 gemäß Fig. 12 in der Desorptionsphase. Wie bei der vorigen Ausführungsform sind in diesem Falle die Luftklappen 9, 10 der Teile 7', 8' der Luftklappeneinheiten 7, 8 geschlossen, während die Luftklappe 9, 10 der Luftklappenteile 7", 8" geöffnet ist. Die Regenerationsluft wird durch den Luftklappenteil 8" in das Modulgehäuse 35 geleitet. Im Unterschied zur vorigen Ausführungsform ist an dem Luftklappenteil 8" keine Leitung 42, 43 vorgesehen, mit welcher die Regenerationsluft zu den einzelnen Kartuschen 11 geleitet wird. Die Regenerationsluft strömt hinter der Luftklappeneinheit 8 zu den Endscheiben 14 der Kartuschen 11 und strömt durch deren Durchtrittsöffnungen in die jeweilige Kartusche. Im Bereich zwischen der Achse 12 und dem ACF-Gewebe 31 strömt die Regenerationsluft zunächst axial und tritt dann durch das ACF-Gewebe 31 radial nach außen. Im Bereich zwischen den einzelnen Kartuschen strömt die nunmehr mit den aufgenommenen Bestandteilen versehene Regenerationsluft zum Luftklappenteil 7" und tritt dort als Fortluft aus.

Da die Luftklappen 9, 10 der Luftklappenteile 7', 8' in der Schließstellung dicht aneinander liegen, kann durch sie weder Luft von außen eintreten noch Luft von innen nach außen gelangen.

In den dargestellten Ausführungsbeispielen sind die Luftklappenteile 7", 8" mit jeweils nur einer einzigen Luftklappe 9, 10 versehen. Es ist selbstverständlich möglich, auch die Luftklappenteile 7", 8" mit mehr als einer Luftklappe zu versehen. In diesem Falle schließen die Luftklappen in der Schließstellung die entsprechende Eintrittsöffnung luftdicht ab.

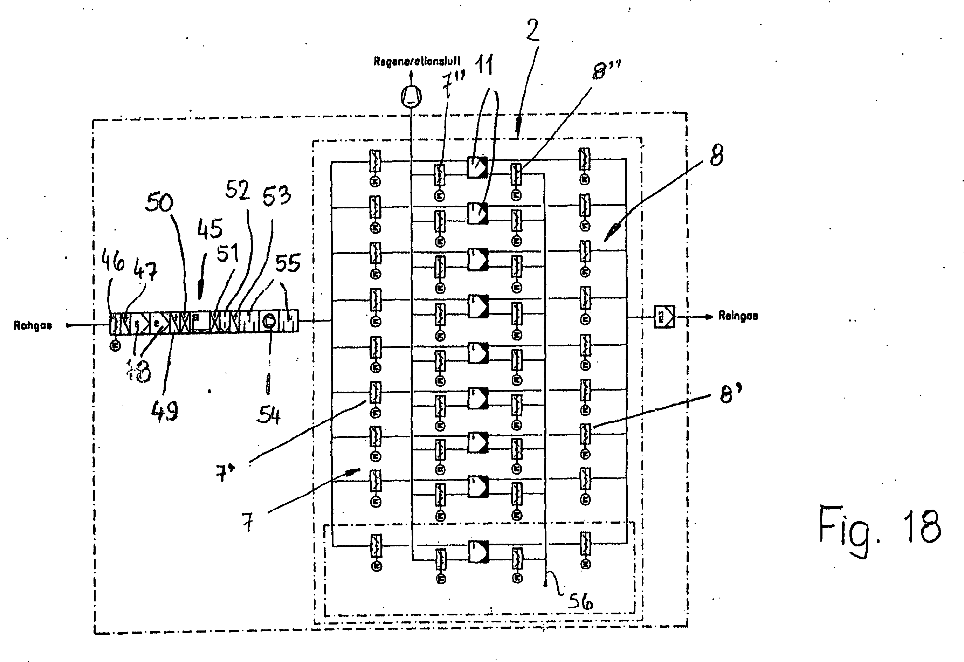

Fig. 18 zeigt in schematischer Darstellung eine Anlage zur Aufbereitung von Außenluft. Dem Filtermodul 2, das beispielhaft mit neun Kartuschen 11 versehen ist, ist ein Außenluftgerät 45 vorgeschaltet, über das das Rohgas dem Filtermodul 2 zugeführt wird. Die Ausbildung des Außenluftgerätes 45 ist bekannt und wird darum auch nicht näher beschrieben. Es hat an der Eintrittsseite eine Luftklappeneinheit 46, der ein Lufterhitzer 47 nachgeschaltet ist. Ihm nachgeschaltet sind zwei Filter 48, ein weiterer Lufterhitzer 49 und eine Kühleinheit 50. Das Rohgas strömt im Außenluftgerät 46 noch durch eine weitere Kühleinheit 51, einen Kondensator 52, einen Lufterhitzer 53 und ein Gebläse 54 in das Filtermodul 2. Dem Gebläse 54 ist jeweils ein Schalldämpfer 55 vor- und nachgeschaltet.

Innerhalb des Filtermoduls 2 wird das zugeführte Rohgas in der anhand der vorigen Ausführungsbeispiele beschriebenen Weise durch die Kartuschen 11 geführt, wobei die im Rohgas befindlichen unerwünschten Bestandteile im ACF-Gewebe 31 zurückgehalten werden. Das gereinigte Rohgas tritt dann als Reingas über die Luftklappeneinheit 8 nach außen.

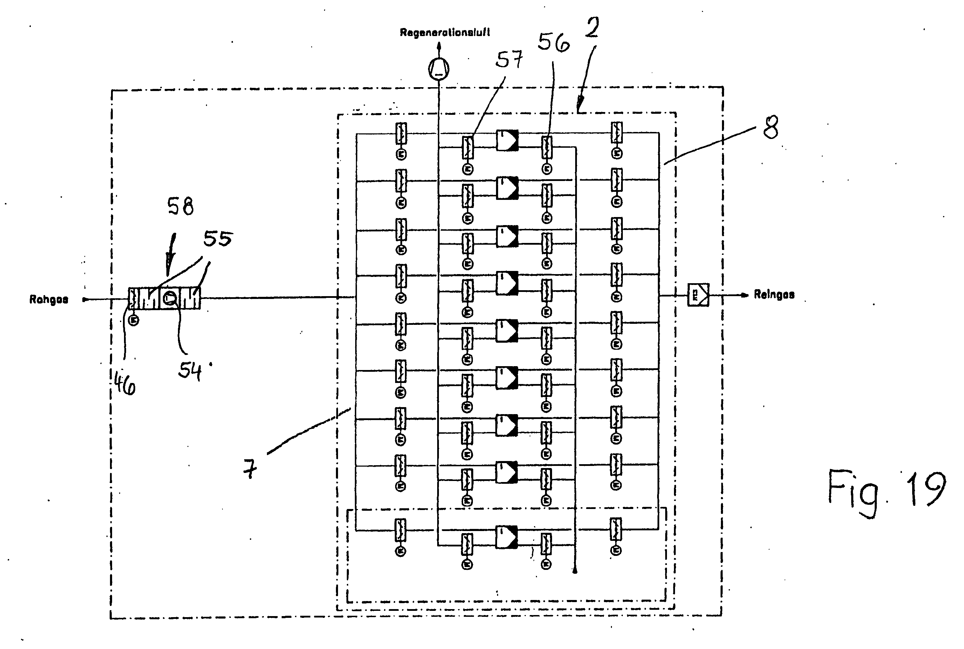

Fig. 19 zeigt eine Anlage zur Behandlung von Fortluft. Das Rohgas wird über ein Fördergerät 58 zugeführt, das aus der Luftklappeneinheit 46 und dem Gebläse 54 besteht, dem jeweils ein Schalldämpfer 55 vor- und nachgeschaltet ist. Das Rohgas wird im Fördergerät 58 nicht aufbereitet wie die Außenluft bei der Anlage gemäß Fig. 18. Über die Luftklappeneinheit 7 strömt das Rohgas in das Filtermodul 2, in dem es in der beschriebenen Weise von den unerwünschten Bestandteilen gereinigt wird. Das auf diese Weise erhaltene Reingas strömt über die rückseitige Luftklappeneinheit 8 nach außen. Das Filtermodul 2 ist im übrigen gleich ausgebildet wie bei der Ausführungsform nach Fig. 18.

Mit dem Luftklappenteil 7", 8" wird in der beschriebenen Weise die Zufuhr der Regenerationsluft gesteuert. Solange sich das Filtermodul 2 in der Adsorptionsphase befindet, sind die Luftklappenteile 7", 8" geschlossen. Das Rohgas strömt dadurch lediglich über die geöffneten Luftklappen der Luftklappteile 7' in das Filtermodul 2 und von dort in der beschriebenen Weise durch die Kartuschen 11. Das Reingas tritt dann über den Luftklappenteil 8' nach außen.

Sollen die Kartuschen 11 regeneriert werden, dann werden die Luftklappen der Luftklappenteile 7', 8' geschlossen und die Luftklappen der Luftklappenteile 7", 8" geöffnet, so daß die Regenerationsluft über den Einlaß 56 durch die einzelnen Kartuschen 11 strömt.

Wie die Fig. 18 und 19 zeigen, sind die Luftklappen der Luftklappeneinheiten 7, 8 unabhängig voneinander jeweils motorisch antreibbar. Dadurch ist es möglich, innerhalb des Filtermoduls 2 einzelne Kartuschen 11 durch entsprechendes Umschalten aus dem Adsorptionsvorgang herauszunehmen und zu regenerieren, während durch die übrigen Kartuschen weiterhin das Rohgas strömt. Es ist auf diese Weise möglich, wie anhand von Fig. 4 beschrieben worden ist, nacheinander die jeweils notwendigen Kartuschen zu regenerieren, ohne den Adsorptionsvorgang unterbrechen zu müssen.

Wie die Fig. 18 und 19 zeigen, lassen sich die Kartuschen 11 mit dem ACF-Gewebe optimal sowohl zur Außenluftaufbereitung als auch zur Fortluftbehandlung einsetzen.

## Patentansprüche

1. Adsorber zur Reinigung von Rohgas, mit wenigstens einem Filterelement, das aus elektrisch leitfähigem Adsorbermaterial (31) besteht und zu einem Zylinder geformt ist, an dessen beiden Enden jeweils eine Endscheibe (13, 14) vorgesehen ist,
**dadurch gekennzeichnet, daß** die Endscheiben (13, 14) unter Zwischenlage elektrisch nicht leitender Ringdichtungen (17, 24) auf einer Achse (12) sitzen, die vom Adsorbermaterial (31) mit Abstand umgeben ist, das unter axialer Spannung steht.

2. Adsorber nach Anspruch 1,
**dadurch gekennzeichnet, daß** das Adsorbermaterial (31) Aktivkohle ist.

3. Adsorber nach Anspruch 1 oder 2,
**dadurch gekennzeichnet, daß** das Adsorbermaterial (31) ein ACF-Gewebe oder ACF-Vlies ist.

4. Adsorber nach einem der Ansprüche 1 bis 3,
**dadurch gekennzeichnet, daß** die Endscheiben (13, 14) einen abgewinkelten Außenrand (29, 30) aufweisen, auf dem das Adsorbermaterial (31) vorteilhaft mit einem Spannring (32, 33) befestigt ist.

5. Adsorber nach einem der Ansprüche 1 bis 4,
**dadurch gekennzeichnet, daß** das Adsorbermaterial (31) auf einem Träger aus elektrisch nicht leitendem, luftdurchlässigem Material angeordnet ist.

6. Adsorber nach einem der Ansprüche 1 bis 5,
**dadurch gekennzeichnet, daß** die Achse (12) im Bereich zwischen den Endscheiben (13, 14) mit wenigstens einer Durchtrittsöffnung für das Rohgas versehen ist.

7. Adsorber nach einem der Ansprüche 1 bis 6,
**dadurch gekennzeichnet, daß** die eine Endscheibe (13) luftdicht ausgebildet und die andere Endscheibe (14) luftdurchlässig ist.

8. Adsorber nach einem der Ansprüche 1 bis 7,
**dadurch gekennzeichnet, daß** die Endscheiben (13, 14) einen abgewinkelten Innenrand (16, 26) aufweisen, mit dem sie auf den Ringdichtungen (17, 24) sitzen.

9. Adsorber nach einem der Ansprüche 1 bis 8,
**dadurch gekennzeichnet, daß** auf dem über die eine Ringdichtung (17) vorstehenden Ende (21) der Achse (12) eine Kontermutter (22) sitzt, an der die Ringdichtung (17) anliegt.

10. Adsorber nach einem der Ansprüche 1 bis 9,
**dadurch gekennzeichnet, daß** auf dem anderen Ende der Achse (12) ein Sicherungsring (28) für die andere Ringdichtung (24) sitzt.

11. Adsorber nach einem der Ansprüche 1 bis 10,
**dadurch gekennzeichnet, daß** die Endscheiben (13, 14) elektrisch leitend sind.

12. Adsorber nach einem der Ansprüche 1 bis 11,
**dadurch gekennzeichnet, daß** die Endscheiben (13, 14) elektrische Kontakte aufweisen.

## Claims

1. Adsorber for cleaning raw gas, having at least one filter element which is composed of electrically conductive adsorber material (31) and is shaped into a cylinder, at the two ends of which respective terminal discs (13, 14) are provided,
**characterised in that** the terminal discs (13, 14) are seated on a shaft (12) with interposition of electrically non-conductive annular seals (17, 24), the shaft being surrounded at a spacing by the adsorber material (31) which is axially tensioned.

2. Adsorber according to Claim 1,
**characterised in that** the adsorber material (31) is activated carbon.

3. Adsorber according to Claim 1 or 2,
**characterised in that** the adsorber material (31) is a woven ACF material or a non-woven ACF material.

4. Adsorber according to one of Claims 1 to 3,
**characterised in that** the terminal discs (13, 14) have an angled outer edge (29, 30), on which the adsorber material (31) is fastened, advantageously by a clamping ring (32, 33).

5. Adsorber according to one of Claims 1 to 4,
**characterised in that** the adsorber material (31) is arranged on a carrier made of electrically non-conductive, air-permeable material.

6. Adsorber according to one of Claims 1 to 5,
**characterised in that** the shaft (12) is provided, in the region between the terminal discs (13, 14), with at least one through-opening for the raw gas.

7. Adsorber according to one of Claims 1 to 6,
**characterised in that** one terminal disc (13) is of air-tight design and the other terminal disc (14) is air-permeable.

8. Adsorber according to one of Claims 1 to 7,
**characterised in that** the terminal discs (13, 14) have an angled inner edge (16, 26), by which they are seated on the annular seals (17, 24).

9. Adsorber according to one of Claims 1 to 8,
**characterised in that** a lock nut (22) is seated on the end (21) of the shaft (12) projecting beyond one annular seal (17), the annular seal (17) resting against the lock nut (22),

10. Adsorber according to one of Claims 1 to 9,
**characterised in that** a securing ring (28) for the other annular seal (24) is seated on the other end of the shaft (12).

11. Adsorber according to one of Claims 1 to 10,
**characterised in that** the terminal discs (13, 14) are electrically conductive.

12. Adsorber according to one of Claims 1 to 11,
**characterised in that** the terminal discs (13, 14) have electrical contacts.

## Revendications

1. Adsorbant pour l'épuration de gaz bruts, comportant au moins un élément de filtrage, qui est formé par un matériau adsorbant (31) électroconducteur et est réalisé en forme de cylindre, aux deux extrémités duquel est prévu respectivement un disque frontal (13, 14),
**caractérisé en ce que** les disques frontaux (13, 14) sont montés sur un axe (12) en intercalant des bagues d'étanchéité (17, 24) non électroconductrices, qui sont entourées à distance par le matériau adsorbant (31) qui est mis sous contrainte axiale.

2. Adsorbant selon la revendication 1,
**caractérisé en ce que** le matériau adsorbant (31) est un charbon actif.

3. Adsorbant selon la revendication 1 ou 2,
**caractérisé en ce que** le matériau adsorbant (31) est un tissu ACF (chlorofluorure d'aluminium) ou un non-tissé ACF.

4. Adsorbant selon l'une quelconque des revendications 1 à 3,
**caractérisé en ce que** les disques frontaux (13, 14) comportent un bord extérieur (29, 30) coudé, sur lequel le matériau adsorbant (31) est fixé de manière avantageuse avec une bague de serrage (32, 33).

5. Adsorbant selon l'une quelconque des revendications 1 à 4,
**caractérisé en ce que** le matériau adsorbant (31) est disposé sur un support en matériau non électroconducteur, perméable à l'air.

6. Adsorbant selon l'une quelconque des revendications 1 à 5,
**caractérisé en ce que** l'axe (12), dans la zone entre les disques frontaux (13, 14), est muni au moins d'un orifice de passage pour le gaz brut.

7. Adsorbant selon l'une quelconque des revendications 1 à 6,
**caractérisé en ce que** l'un des disques frontaux (13) est imperméable à l'air et l'autre disque frontal (14) est perméable à l'air.

8. Adsorbant selon l'une quelconque des revendications 1 à 7,
**caractérisé en ce que** les disques frontaux (13, 14) comportent un bord intérieur (16, 26) coudé, par lequel ils sont posés sur les bagues d'étanchéité (17, 24).

9. Adsorbant selon l'une quelconque des revendications 1 à 8,
**caractérisé en ce que** sur l'extrémité (21) de l'axe (12), en saillie au-dessus de l'une des bagues d'étanchéité (17), est monté un contre-écrou (22), contre lequel la bague d'étanchéité (17) vient en appui.

10. Adsorbant selon l'une quelconque des revendications 1 à 9,
**caractérisé en ce que** sur l'autre extrémité de l'axe (12) est posée une bague de blocage (28) pour l'autre bague d'étanchéité (24).

11. Adsorbant selon l'une quelconque des revendications 1 à 10,
**caractérisé en ce que** les disques frontaux (13, 14) sont électroconducteurs.

12. Adsorbant selon l'une quelconque des revendications 1 à 11,
**caractérisé en ce que** les disques frontaux (13, 14) comportent des contacts électriques.
